# EUROPÄISCHE PATENTSCHRIFT

(11) **EP 1 188 539 B1**
(45) Veröffentlichungstag und Bekanntmachung des Hinweises auf die Patenterteilung: **06.07.2005**
(21) Anmeldenummer: 01118956.0
(22) Anmeldetag: 06.08.2001
(51) Int. Cl.: B29C 47/08, B29C 47/92

(54) **Blaskopfspülung**
Purging a blowing die
Purge d'une filière de soufflage

(30) Priorität: 18.09.2000 DE 10046454
(43) Veröffentlichungstag der Anmeldung: 20.03.2002
(73) Patentinhaber: Windmöller & Hölscher KG, 49525 Lengerich (DE)
(72) Erfinder: Pätzold, Reinhard, 49078 Osnabrück (DE); Krause, Ulrich, 49536 Lienen (DE)

(56) Entgegenhaltungen:
- EP-A- 1 151 845
- DE-C- 19 931 147
- US-A- 2 779 696
- US-A- 4 510 104
- PATENT ABSTRACTS OF JAPAN vol. 017, no. 623 (M-1511), 17. November 1993 (1993-11-17) -& JP 05 192982 A (SUMITOMO ELECTRIC IND LTD), 3. August 1993 (1993-08-03) -& DATABASE WPI Week 199335 Derwent Publications Ltd., London, GB; AN 1993-277793 XP002231064 & JP 05 192982 A

## Beschreibung

Die Erfindung betrifft ein Verfahren zum Durchspülen Polymerbeziehungsweise Kunststoffschmelze führender Teile von Folienextrusionanlagen mit zumindest einem Extruder zwecks Chargenwechsel, Steuer- und Bedieneinheiten und Folienextrusionsanlagen zur Durchführung des Verfahrens.

Folienextrusionanlagen zur Herstellung von Folien sind bekannt. Zur Herstellung von mehrschichtiger Folie, die im folgenden als Folienverbünde bezeichnet werden, werden Folienextrusionsanlagen mit mehreren Extrudern eingesetzt. Sie gliedern sich vor allem in Folienschlauchextrusionsanlagen und Flachfolienextrusionsanlagen.

Folienschlauchextrusionsanlagen sind mit sogenannten Blasköpfen, die Folienschläuche ausstoßen, ausgestattet.

Bei Flachfolienextrusionsanlagen, die Folie mit mehreren Schichten herstellen, übernimmt in der Regel ein sogenannter Feedblock zunächst die Zusammenführung der verschiedenen Polymer- beziehungsweise Kunststoffmaterialien. Dann wird der entstandene Kunstoffverbund von einer Düse extrudiert und eine Flachfolie hergestellt.
Beide Anlagentypen werden beispielhaft in der gegenständlichen Beschreibung anhand von Ausfuhrungsbeispielen naher beschrieben.
In den letzten Jahren ist Bedarf an vielen unterschiedlichen Typen von Folien und Folienverbünden entstanden. Daher werden des Öfteren unterschiedliche Folienverbünde nacheinander von derselben Folienextrusionanlage hergestellt.
Bei der Umstellung von einem Folienverbund zum nächsten ist es oft erforderlich, die Teile der Folienextrusionsanlage, welche die Polymerbeziehungsweise Kunststoffmasse führen, zu reinigen.
Diese Reinigung kann durchgeführt werden, indem die Extrusionsanlage zerlegt und die polymer- beziehungsweise kunststoffführenden Teile in großvolumigen Reinigungseinrichtungen gesäubert werden.
Aufgrund des enormen Aufwandes, der mit einem solchen Reinigungsvorgang verbunden ist, werden jedoch oft sogenannte Spülphasen bei der Umstellung von einem Folienverbund zum nächsten eingelegt.

Ein Verfahren zum Spülen von Folienextrusionsanlagen, mit denen einschichtige Kunststofffolien produziert werden, ist aus der DE 199 31 147 bekannt. Dabei wird der Durchsatz von thermoplastischer Kunststoffschmelze durch einen Extruderdüsenkopf periodisch erhöht und erniedrigt. Ablagerungen in dem Extruderdüsenkopf werden so vermieden.

Zu diesem Zweck wird zumindest an dem Teil der Extruder, an dem Materialwechsel vorgenommen werden, eine periodische Änderung der Drehzahl vorgenommen.

Durch die Änderung des Massedrucks im Extruder, den Zuleitungen des Extruders, den wendelförmigen Nuten in dem zylindrischen Dorn des Blaskopfes beziehungsweise der entsprechenden Teile von Flachfolienextrusionsanlagen werden Materialreste aus Folienextrusionsanlagen ausgespült.

Während einer solchen Spulphase werden die Kunststoffreste in einer Folienextrusionsanlage in der Regel mit anderen Kunststoffschmelzen durchspült.

Hierbei wird oft das Material des folgenden Folienverbundes verwendet. Es ist jedoch auch möglich, anderes Material zu verwenden, das kostengünstig ist oder gute Spüleigenschaften besitzt.

Ein solcher Spülvorgang zur Umstellung von einem Folienverbund zum nächsten Folienverbund kann jedoch sehr lange dauern, da in der Folienextrusionanlage Materialreste hängen bleiben, die sich nur langsam lösen. Darüber hinaus kann es vor allem bei einer zu starken Erniedrigung des Durchsatzes zu einem Folienabriss kommen, so dass die austretende Kunststoffschmelze anderweitig entfernt werden muss. Eine Erhöhung und eine Erniedrigung des Massendrucks in engen Grenzen führt jedoch zu einer Verlängerung der Spülzeit.

An dieser Stelle setzt die vorliegende Erfindung an.

Es wird ein Verfahren zum Durchspülen polymer- beziehungsweise kunstoffschelzeführender Teile von Folienextrusionanlagen mit zumindest einem Extruder zwecks Chargenwechsel vorgeschlagen, das die Umstellzeiten verkürzt und das einen Folienabriss vermeidet.

Das erfindungsgemäße Verfahren weist die Merkmale des Kennzeichens des Anspruchs 1 auf.

Gemäß diesem Verfahren wird aus der Gruppe der Extruder, in denen periodische Änderungen der Drehzahlen vorgenommen werden, mindestens ein Leitextruder (A) und mindestens ein Folgeextruder (B, C, D) ausgewählt werden, deren Drehzahlen jeweils unter Berücksichtigung des Massedurchsatzes der Folienextrusionsanlage mit einer Amplitude entgegengesetzten Vorzeichens pulsieren, so dass ein Folienabriss vermieden wird. Insbesondere bei Extrudern, an denen keine Materialwechsel durchgeführt werden oder bei Extrudern, die mit einem Material betrieben werden, das sich gut aus der Anlage ausspülen lässt, besteht zunächst keine unbedingte Notwendigkeit des periodischen Drehzahlwechsels.

Auf diese Weise wird bei allen Folienextrusionsanlagen der große Aufwand, der durch das Wiedereinziehen der Folie in die Anlage nach einem Folienabriss verursacht wird, vermieden. So muss beispielsweise bei Folienschlauchextrusionsanlagen, die oft auch mit Reversiereinrichtungen versehen sind, nach einem Blasenabriss ein einmal abgerissener Folienschlauch bis zur Reversiervorrichtung hochgezogen und in diese regelrecht eingefädelt werden.
Zu diesem Zweck kann der Massedurchsatz beispielsweise auf dem Niveau gehalten werden, das bei der Produktion der letzten Charge eingestellt war.
Es ist jedoch in der Regel vorteilhaft, wenn durch die Abstimmung der Drehzahl der verschiedenen Extruder ein geringerer Massedurchsatz gewählt wird, der immernoch ausreicht, um während des Spülvorgangs einen Folienabriss zu vermeiden.
Insbesondere, wenn die Kapazität einer Gruppe erster Extruder, an denen kein Materialwechsel durchgeführt wird, nicht benötigt wird, um während des periodischen Drehzahlwechsels der anderen Extruder einen Folienabriss zu vermeiden, kann darauf verzichtet werden, die Drehzahl der zuerst genannten ersten Extruder periodisch zu ändern. Daher ist es vorteilhaft, diese ersten Extruder während des Spülvorgangs mit einer konstanten Drehzahl, die auch Null betragen kann, zu betreiben.

Eine weitere vorteilhafte Ausführungsform der Erfindung sieht vor, dass die während des Spülvorganges notwendige Änderung der Drehzahlen des mindestens einen Leitextruders und des mindestens einen Folgeextruders von einer zentralen Steuer- und Bedieneinheit aus durchgeführt wird.
Die Änderung der Drehzahlen der unterschiedlichen Extruder kann an der zentralen Steuer- oder Bedieneinheit von einem Maschinenbediener manuell eingestellt werden.

Insbesondere aus Rationaliersiergsgründen ist es jedoch von Vorteil, wenn die zentrale Steuer- oder Bedieneinheit die Änderung der Drehzahlen automatisch vornimmt.
Zu diesem Zweck kann die Steuer- oder Bedieneinheit bei der Änderung der Drehzahlen, von der minimalen Drehzahl des mindestens einen Folgeextruders ausgehen, um anschließend die erforderliche Drehzahl des mindestens einen Leitextruders zu errechnen und einzustellen. Natürlich kann die Minimaldrehzahl eines Folgeextruders auch Null betragen. Wenn die Drehzahl des mindestens einen Folgeextruders wieder heraufgefahren wird, kann die Steuer- und Bedieneinheit in gleicher Weise von der Minimaldrehzahl des mindestens einen Leitextruders ausgehen und die zur Vermeidung eines Folienrisses erforderliche Drehzahl der Folgeextruder einstellen.
An dieser Stelle ist anzumerken, dass die Bezeichnungen Leitextruder und Folgeextruder aus Gründen der Übersichtlichkeit eingeführt wurden. Bei den Leit- und Folgeextrudern handelt es sich - wie bereits oben dargestellt - um zwei durch Auswahl zusammengestellte Funktionsgruppen von Extrudern, bei denen wahrend des Spülprozesses die Drehzahl periodisch geändert wird. Die Zahl der Extruder in einer solchen Gruppe kann auch eins betragen. Die Amplitude der Drehzahländerung der beiden Funktionsgruppen besitzt in der Regel zu einem Zeitpunkt ein unterschiedliches Vorzeichen. Daher sind die Maßnahmen und Mittel, welche zur Ermittlung einer vorteilhaften Drehzahl von Leit- und Folgeextrudern und der anschießenden Einstellung derselben eingesetzt werden weitgehend identisch. Um Missverständnissen vorzubeugen ist auch zu betonen, dass die Drehzahlen der unterschiedlichen Extruderschnecken einer solchen Funktionsgruppe natürlich unterschiedlich sein können.
In der weiteren Beschreibung und in den Ansprüchen wird deutlich, dass es auch vorteilhaft ist, bei der Zusammenstellung der Funktionsgruppen Extruder mit großem Massendurchsatz mit billigem Kunstoffgranulat, oder mit Kunstoffmaterial mit guten Spüleigenschaften bevorzugt einer Funktionsgruppe zuzuordnen. In der vorliegenden Druckschrift ist das die Gruppe der Leitextruder.
Die Drehzahländerung der Leit- und der Folgeextruder kann auch maßgeblich von der Drehzahl bestimmt werden, die in einem oder mehreren Leitextruder zu dem maximalen Massedruck führt. Daher ist ein Verfahren ebenso sinnvoll, bei dem die zentrale Steuer- oder Bedieneinheit bei der Änderung der Drehzahlen von der maximalen Drehzahl ausgeht, die der mindestens eine Leitextruder hat, wenn er seinen maximalen Massedruck erreicht, um anschließend die erforderliche Drehzahl des mindestens einen Folgeextruders zu errechnen und einzustellen. Umgekehrt kann bei der Drehzahländerung der Leitextruder auch der maximale Massendruck in den Folgeextrudern in gleicher Weise ermittelt und berücksichtigt werden.
Bei Einsatz eines der beiden vorgenannten Verfahren soll des Öfteren auch ein Folienabriß vermieden werden, der eintreten kann, wenn der Materialdurchsatz derFolienextrusionsanlage zu stark absinkt was unter anderem zum Ausstoß sehr dünnwandiger Folie führt. In diesem Fall hat die zentrale Steuer- und Bedieneinheit auch den minimalen Materialdurchsatz der Folienextrusionsanlage, der einen Folienabriss vermeidet, zu berücksichtigen. Um den Spülprozess zu beschleunigen, können bevorzugt Extruder mit großem Materialdurchsatz als Leitextruder ausgewählt werden.
Um die Spülung moglichst effizient zu gestalten, kann der mindestens eine Leitextruder während des Spülvorganges mit einem Material mit guten Spüleigenschaften beschickt werden. Die in den Leitextrudern verwendeten Materialien sollten tendenziell einen niedrigeren Preis haben als diejenigen, die in den Folgeextrudern Verwendung finden.

Steuer- und Bedieneinheiten zur Durchführung der vorgenannten Verfahren können verschiedene Mittel enthalten, die die Durchführung eines Spülvorgangs im Rahmen eines automatisierten Programmablaufs erlauben.
Zu diesem Zweck kann eine Steuer und Bedieneinheit, die Mittel zur Eingabe oder Ermittlung der Mindestdrehzahl oder der maximalen Drehzahl der einen Funktionsgruppe von Extrudern einer Funktionsgruppe enthält, mit weiteren Mitteln zur automatischen Ermittlung der erforderlichen Drehzahl der jeweils anderen Funktionsgruppe ausgestattet sein. So kann die Eingabe beispielsweise über einen Terminal erfolgen, während die Ermittlung der erforderlichen Drehzahl automatisch von einem Computer übernommen wird. Eine besonders vorteilhafte Steuer- und Bedieneinheit besitzt Mittel zur Einstellung, optischen Darstellung oder Überwachung mindestens eines Betriebsparameters eines Spülvorganges. Auf diese Weise können beispielsweise Diagramme, auf denen die Drehzahl oder der Massendurchsatz der Extruder gegen die Zeit aufgetragen ist, auf Bildschirmen, Displays oder Ähnlichem, die in geeigneter Form mit der Steuer- und Bedieneinheit verbunden sind, dargestellt werden.
Durch eine solche Maßnahme verbessert sich die Anschaulichkeit des eingestellten Betriebszustandes des Extruders erheblich. Es kann dem Maschinenbediener überlassen bleiben, ob er in einen vorgegebenen Programmablauf eingreift oder ob er das Ende des Programms abwartet.
Die im Rahmen von Spülvorgangen anfallende Folie wird entweder der Abfallwirtschaft zugeführt oder zu einem relativ niedrigen Preis verkauft. Folie, die bei dem erfindungsgemäßen Spülverfahren anfällt, zeichnet sich bei genauerer Untersuchung des Folienquerschnitts durch eine periodische Änderung der Dicken der einzelnen Schichten des Folienverbundes aus.

Weitere Merkmale und Vorteile der Erfindung ergeben sich aus den weiteren Ansprüchen und der nachstehenden Beschreibung in Verbindung mit den Zeichnungen, in denen Ausführungsbeispiele der Erfindung schematisch veranschaulicht werden. Die Figuren zeigen:
- Figur 1:: Eine Prinzipskizze einer Folienschlauchextrusionsanlage mit einer zentralen Steuer- und Bedieneinrichtung
- Figur 2:: Den Drehzahlverlauf von Extruder A während eines ersten beispielhaften Spülvorgangs an einer Extrusionsanlage mit vier Extrudern aufgetragen gegen die Zeit
- Figur 3:: Den Drehzahlverlauf von Extruder B während eines ersten beispielhaften Spülvorgangs an einer Extrusionsanlage mit vier Extrudern aufgetragen gegen die Zeit
- Figur 4:: Den Drehzahlverlauf von Extruder C wahrend eines ersten beispielhaften Spülvorgangs an einer Extrusionsanlage mit vier Extrudern aufgetragen gegen die Zeit
- Figur 5:: Den Drehzahlverlauf von Extruder D während eines ersten beispielhaften Spülvorgangs an einer Extrusionsanlage mit vier Extrudern aufgetragen gegen die Zeit
- Figur 6:: Den gesamten Materialdurchsatz der Extrusionsanlage wahrend eines ersten beispielhaften Spülvorgangs an einer Extrusionsanlage mit vier Extrudern aufgetragen gegen die Zeit

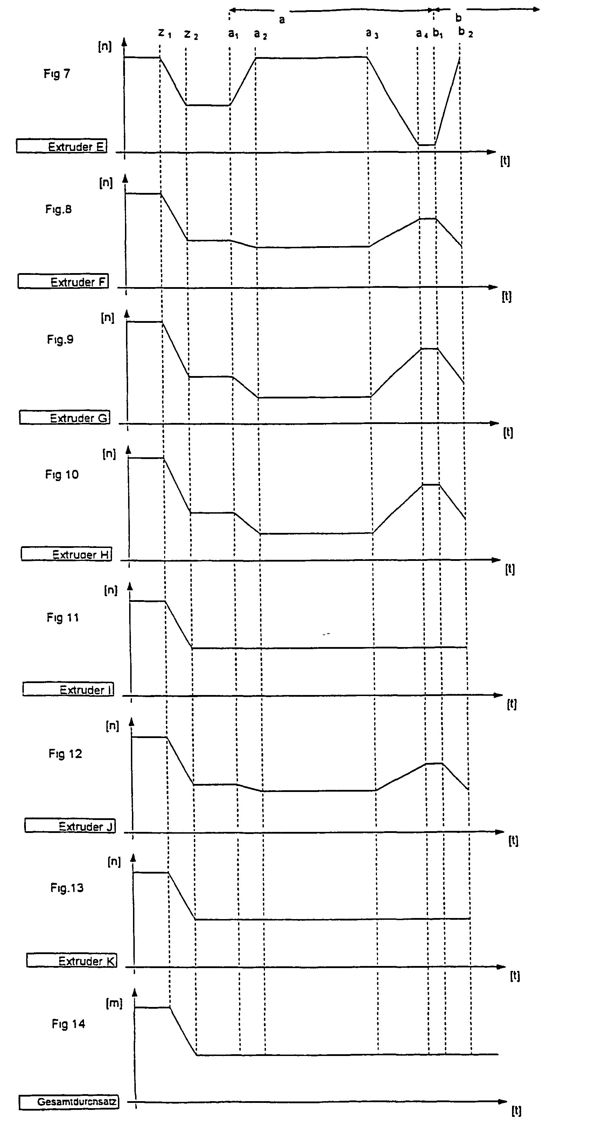

- Figur 7:: Den Drehzahlverlauf von Extruder E während eines zweiten beispielhaften Spülvorgangs an einer Extrusionsanlage mit sieben Extrudern aufgetragen gegen die Zeit
- Figur 8:: Den Drehzahlverlauf von Extruder F während eines zweiten beispielhaften Spülvorgangs an einer Extrusionsanlage mit sieben Extrudern aufgetragen gegen die Zeit
- Figur 9:: Den Drehzahlverlauf von Extruder G während eines zweiten beispielhaften Spülvorgangs an einer Extrusionsanlage mit sieben Extrudern aufgetragen gegen die Zeit
- Figur 10:: Den Drehzahlverlauf von Extruder H während eines zweiten beispielhaften Spülvorgangs an einer Extrusionsanlage mit sieben Extrudern aufgetragen gegen die Zeit
- Figur 11:: Den Drehzahlverlauf von Extruder I während eines zweiten beispielhaften Spülvorgangs an einer Extrusionsanlage mit sieben Extrudern aufgetragen gegen die Zeit
- Figur 12:: Den Drehzahlverlauf von Extruder J während eines zweiten beispielhaften Spülvorgangs an einer Extrusionsanlage mit sieben Extrudern aufgetragen gegen die Zeit
- Figur 13:: Den Drehzahlverlauf von Extruder K während eines zweiten beispielhaften Spülvorgangs an einer Extrusionsanlage mit sieben Extrudern aufgetragen gegen die Zeit
- Figur 14:: Den gesamten Materialdurchsatz der Extrusionsanlage während eines zweiten beispielhaften Spülvorgangs an einer Extrusionsanlage mit sieben Extrudern aufgetragen gegen die Zeit
- Figur 15:: Einen Querschnitt durch einen Feedblock und eine Breitdüse einer beispielhaften Flachfolienextrusionsanlage
- Figur 16:: Einen Querschnitt durch einen Folienverbund aus verschiedenen Kunststoffschichten

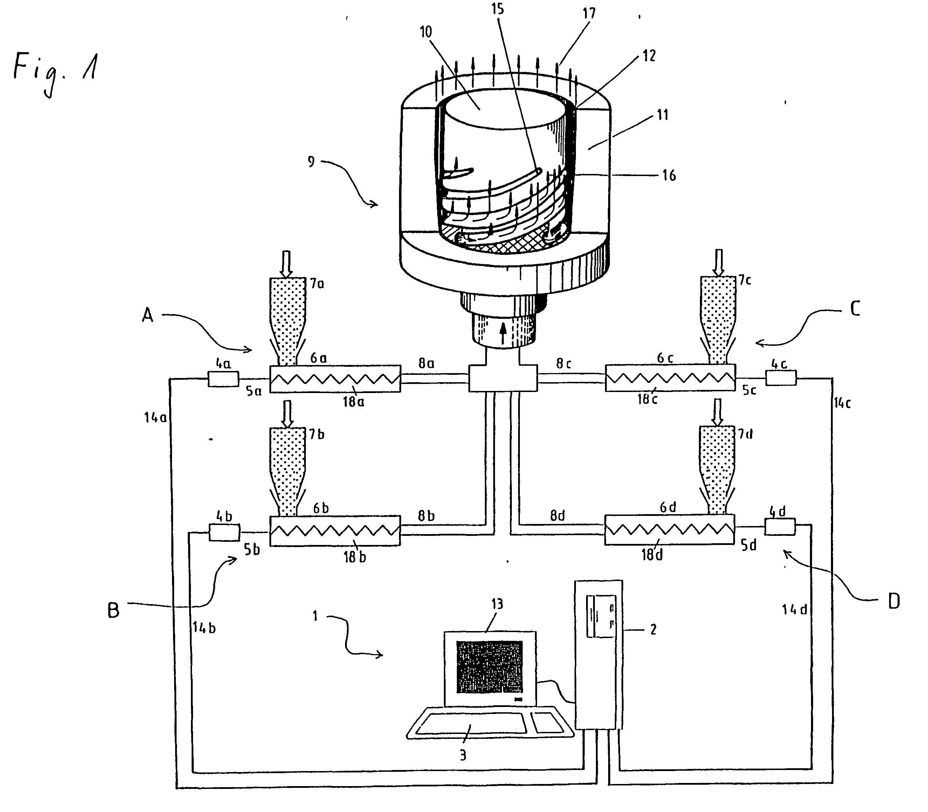

Figur 1 zeigt eine Prinzipskizze einer Folienschlauchextrusionsanlage mit einer Steuer- und
Bedieneinheit 1, die in diesem Ausführungsbeispiel aus einem Computer 2 der zumindest eine nicht dargestellte CPU und einen ebenfalls nicht dargestelltem Arbeitsspeicher enthält, sowie einem Bildschirm 13 und einer Tastatur 3.
Die Steuer- und Bedieneinheit 1 ist über die Signalleitungen 14a, 14b, 14c und 14d mit den Antriebseinheiten 4a, 4b, 4c und 4d verbunden, welche über die Wellen 5a, 5b, 5c, 5d die durch gezackte Linien skizzierten Extruderschnecken 18a, 18b, 18c, 18d in den Extrudergehäusen 6a, 6b, 6c, 6d antreiben. Auf diese Weise ist die Steuer- und Bedieneinheit in der Lage, die Drehzahl der Extruder A, B, C, D zu steuern.
Die Extruder A, B, C, D verfügen außerdem über die Granulattrichter 7a, 7b, 7c, 7d, welche die Extruder mit dem punktförmig dargestellten Granulat versorgen. In den Extrudergehausen 6a, 6b, 6c, 6d wird das Granulat geschmolzen und als verflüssigte Kunstoffmasse, die teilweise unter erheblichem Massedruck steht, über die Zuführungsleitungen 8a, 8b, 8c, 8d dem Folienblaskopf 9 zugeführt.

Der Mantel 11 des Folienblaskopfs 9 ist in der Prinzipskizze geschnitten dargestellt. Diese Darstellungsweise eröffnet den Blick auf den zylindrischen Dorn 10 des Blaskopfes, der von dem Mantel 11 konzentrisch umschlossen wird. In den Außenumfang des Dornes 10 sind wendelförmige Nuten 15 eingearbeitet, welche die verflüssigte Kunstoffmasse in Richtung der Pfeile 16 führen.
Im oberen Bereich des Dornes 10 laufen die wendelförmigen Nuten 15 und speisen die Kunstoffmasse in der durch die gekrümmten Pfeile 16 skizzierten Richtung in den sich in Verarbeitungsrichtung verbreiternden Spalt 12 zwischen dem Dorn 10 und dem Mantel 11 ein. Im weiteren nicht mehr dargestellten Verlauf der Verarbeitung, deren Richtung von den geraden Pfeilen 17 angegeben wird, gelangt die Kunstoffmasse zunächst in den Düsenspalt, verlässt dann den Blaskopf, erkaltet zunehmend und bildet schließlich einen Folienschlauch, der einer direkten Weiterverarbeitung zugeführt oder aufgewickelt wird.

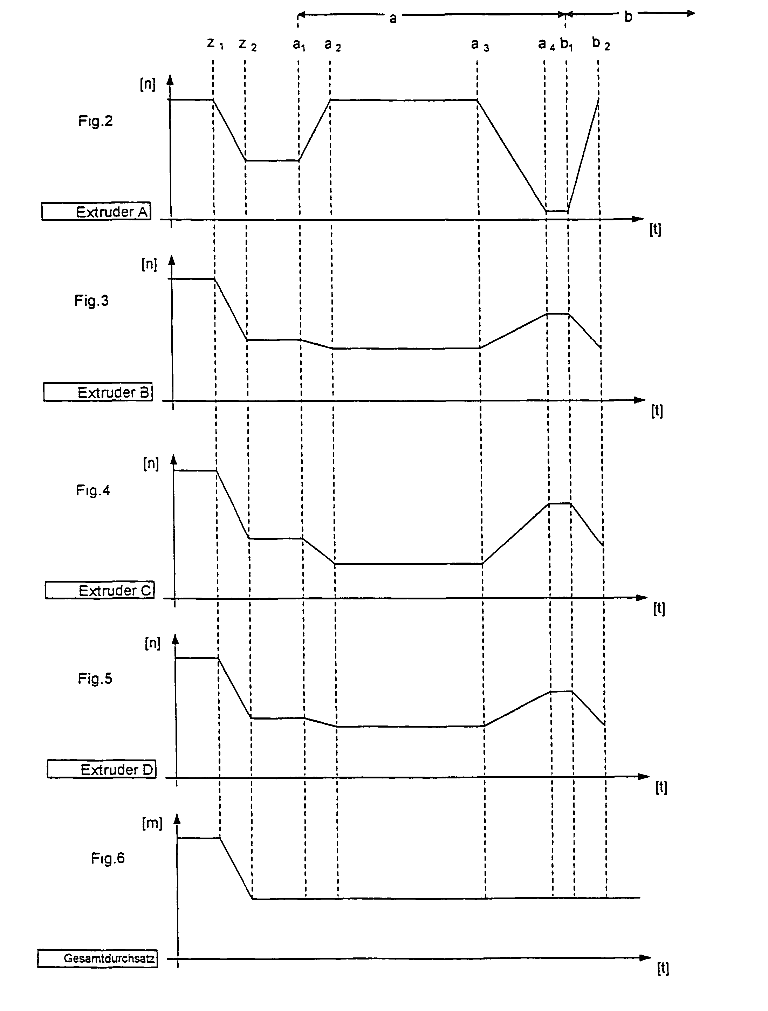

Die Figuren 2 bis 5 zeigen Diagramme, bei denen die Drehzahl der Extruder A, B, C, D bei der Durchführung eines erfindungsgemäßen Verfahrens gegen die Zeit aufgetragen ist.
Vor Beginn des Zeitpunktes z₁ lauft die Produktion eines bestimmten ersten Folienverbundes bereits längere Zeit. Zum Zeitpunkt z₁ beginnt der Spülvorgang bei dem dargestellten Ausfuhrungsbeispiel mit folgender Maßnahme:
Die Drehzahl aller beteiligten Extruder wird heruntergefahren bis der gesamte Massendurchsatz zum Zeitpunkt z₂ ein niedriges Niveau erreicht, das jedoch einen Blasenabriss vermeidet (Figur 6). Auf diesem Niveau wird der gesamte Massendurchsatz während des Spülvorganges gehalten.
Zum Zeitpunkt a₁ beginnt die erste Reinigungsphase a.
Bei diesem Ausführungsbeispiel ist der leistungsfähige Extruder A, der mit kostengünstigem Material guter Spüleigenschaften betrieben wird, als einziger Leitextruder ausgewählt worden. Wie in Figur 2 gezeigt, wird bei dem Leitextruder A während der Zeitspanne zwischen a₁ und a₂ die Drehzahl zunächst erhöht, um dann auf hohem Niveau bis zum Zeitpunkt a₃ konstant gehalten zu werden. Zwischen a₃ und a₄ wird die Drehzahl des Extruders A stark herabgesetzt, um zum Zeitpunkt a₄ ein niedriges Niveau zu erreichen, das bis zum Zeitpunkt b₁ konstant gehalten wird.
Die Extruder B, C, und D wurden als Folgeextruder ausgewählt. Bei ihnen erfolgt zwischen a₁ und a₂, wie in den Figuren 2 bis 5 gezeigt, zunächst eine Absenkung der Drehzahl n. Die Drehzahl der drei Folgeextruder B, C, D, wird in der Folgezeit, bis zum Zeitpunkt a₃ konstant gehalten. An dem Zeitpunkt a₃ wird die Drehzahl der Folgeextruder wieder heraufgefahren, um zum Zeitpunkt a₄ ein hohes Niveau zu erreichen, das bis zum Zeitpunkt b₁ gehalten wird. Das in den Figuren 2 bis 5 gezeigte Ausführungsbeispiel zeigt auch, dass die Drehzahlen und auch die Drehzahlverläufe innerhalb der Gruppe der Folgeextruder B, C, D nicht gleich sein müssen. Bei mehr als einem Leitextruder gilt innerhalb der Gruppe der Leitextruder dasselbe In dem dargestellten Ausführungsbeispiel sind die Drehzahlen der Extruder A, B, C, D so aufeinander abgestimmt, dass der gesamte Massendurchsatz der Folienextrusionsanlage mit Beginn des Spülvorgangs zum Zeitpunkt z₁ herabgesetzt und dann ab dem Zeitpunkt z₂ auf niedrigem Niveau konstant gehalten wird. Diese Vorgehendweise wird in Figur 6 gezeigt. Der dort dargestellte Massendurchsatz ist die Summe des Durchsatzes der Extruder A, B, C, D der Folienextrusionsanlage.

Eine weitere Besonderheit des dargestellten Ausführungsbeispiels ist die geringe Länge der Zeitspanne zwischen a₄ und b₁ im Vergleich zu der Zeitspanne zwischen a₂ und a₃. Die relative Länge dieser beiden Zeitspannen wurde in der gezeigten Weise dimensioniert, da der Leitextruder A mit einem kostengünstigen Material mit guten Spüleigenschaften bestückt ist.
Zum Zeitpunkt b₁ beginnt eine neue Reinigungsphase. Zu diesem Zweck wird die Drehzahl des Leitextruders A erneut stark heraufgesetzt, während die Drehzahlen der Folgeextruder gesenkt werden.

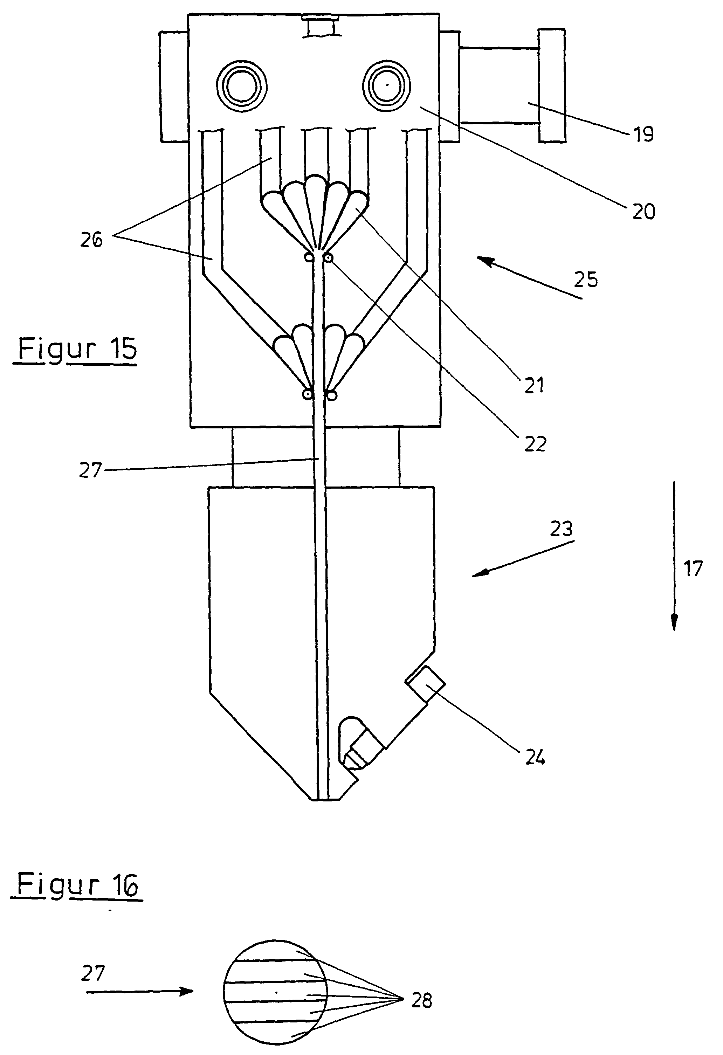

In den Figuren 11 und 13 sind die Drehzahlprofile der Extruder I und K dargestellt, bei denen kein Materialwechsel vorgenommen wird und deren maximaler Massendurchsatz nur zu einem geringen Teil benötigt wird, um während der Spülphase einen Massedurchsatz der gesamten Folienextrusionsanlage zu gewährleisten, der einen Blasenabriss vermeidet.
Um Material zu sparen, wird die Drehzahl und damit der Massedurchsatz von Extruder J und K ab dem Zeitpunkt z₁ gesenkt. Ab dem Zeitpunkt z₂ wird ein konstant niedriges Niveau gehalten.
In Figur 14 wird der Massedurchsatz der Extrusionsanlage des zweiten Ausführungsbeispiels dargestellt. Er verläuft analog zu dem in Figur 6 dargestellten Massedurchsatz des ersten Ausführungsbeispiels.

Selbstverständlich können die beiden oben dargestellten Ausführungsbeispiele des erfindungsgemäßen Verfahrens, die durch die Diagramme in den Figuren 2 bis 6 beziehungsweise 7 bis 14 dargestellt sind, zur Durchspülung aller Arten von Folienextrusionsanlagen durchgeführt werden.

Figur 15 zeigt einen Querschnitt durch einen Feedblock 25 und eine Breitdüse einer beispielhaften Flachfolienextrusionsanlage. Die Polymerbeziehungsweise Kunststoffmasse kommt aus den nicht dargestellten Extrudern und durchläuft die ebenfalls nicht dargestellten Zuführungsleitungen. Die Polymer- beziehungsweise Kunststoffmasse wird dann durch die Extruderanschlüsse 20, von denen nur zwei an dieser Stelle dargestellt sind, dem Feedblock 25 zugeführt. Innerhalb des Feedblockes 25 übernimmt der Schicht-Verteilerbolzen die Verteilung der verschiedenen Polymerbeziehungsweise Kunststoffmassen auf die unterschiedlichen Materialkanäle 26.
Bei der gezeigten Ausführungsform lassen sich mit dem einstellbaren Flügel 21 und dem Verteilerstift 22 Feineinstellungen der Folienschichtdicken vornehmen. Nachdem die verschiedenen Folienschichten zu einem Folienverbund zusammengeführt 27 worden sind, gelangt der Folienverbund weiter in Verarbeitungsrichtung, die durch den geraden Pfeil 17 angegeben ist, in die Breitschlitzdüse 23. Die Breite des Schlitzes der Breitschlitzdüse 23 ist mit dem Automatikdehnbolzen einstell- bzw. regelbar.

Extrudern und durchlauft die ebenfalls nicht dargestellten Zuführungsleitungen. Die Polymer- beziehungsweise Kunststoffmasse wird dann durch die Extruderanschlüsse 20, von denen nur zwei an dieser Stelle dargestellt sind, dem Feedblock 25 zugeführt. Innerhalb des Feedblockes 25 übernimmt der Schicht-Verteilerbolzen die Verteilung der verschiedenen Polymerbeziehungsweise Kunststoffmassen auf die unterschiedlichen Materialkanäle 26
Bei der gezeigten Ausführungsform lassen sich mit dem einstellbaren Flugel 21 und dem Verteilerstift 22 Feineinstellungen der Folienschichtdicken vornehmen. Nachdem die verschiedenen Folienschichten zu einem Folienverbund zusammengefuhrt 27 worden sind, gelangt der Folienverbund in weiter in Verarbeitungsrichtung, die durch den geraden Pfeil 17 angegeben ist, in die Breitschlitzdüse 23. Die Breite des Schlitzes der Breitschlitzdüse 23 ist mit dem Automatikdehnbolzen einstell- bzw. regelbar.
Alle vorgenannten Teile der beschriebenen Flachfolienextrusionsanlage, die Polymer- beziehungsweise Kunstoffschelze führen, konnen mit dem erfindungsgemäßen Verfahren durchspült werden.

Figur 16 zeigt einen Querschnitt durch einen Folienverbund 27 aus verschiedenen Kunststoffschichten 28 wie er im Normalbetrieb von Folienextrusionsanlagen hergestellt wird. Aus Gründen der Übersichtlichkeit wurde darauf verzichtet, einen Querschnitt durch eine in einem erfindungsgemäßen Spülverfahren dargestellte Folie zu zeigen. Der Querschnitt durch eine solche Folie weist periodische Änderungen der verschiedenen Folienschichten 28 auf.

### Bezugszeichenliste

| Extruder | A | B | C | D |
|---|---|---|---|---|
| Extruder | E | F | G | H |
| Extruder | I | J | K | |
| Steuer- und Bedieneinheit | 1 | | | |
| Computer | 2 | | | |
| Tastatur | 3 | | | |
| Antriebseinheit | 4a | 4b | 4c | 4d |
| Welle | 5a | 5b | 5c | 5d |
| Extrudergehäuse | 6a | 6b | 6c | 6d |
| Granulattrichter | 7a | 7b | 7c | 7d |
| Zuführungsleitungen | 8a | 8b | 8c | 8d |
| Folienblaskopf | 9 | | | |
| zylindrischer Dorn | 10 | | | |
| Mantel des Folienblaskopfs | 11 | | | |
| Spalt zwischen Dorn und Mantel | 12 | | | |
| Bildschirm | 13 | | | |
| Signalleitung | 14a | 14b | 14c | 14d |
| wendelförmige Nuten | 15 | | | |
| gekrümmte Pfeile | 16 | | | |
| gerade Pfeile in Verarbeitungsrichtung | 17 | | | |
| Extruderschnecken | 18a | 18b | 18c | 18d |
| Schicht-Verteilerbolzen | 19 | | | |
| Extruderanschluß | 20 | | | |
| Einstellbarer Flügel | 21 | | | |
| Verteilerstift | 22 | | | |
| Breitschlitzdüse | 23 | | | |
| Automatikdehnbolzen | 24 | | | |
| Feedblock | 25 | | | |
| Unterschiedliche Materialkanähle | 26 | | | |
| Folienverbund | 27 | | | |
| verschiedene Kunststoffschichten | 28 | | | |
| Drehzahl | [n] | | | |
| erste Reinigungsphase | a | | | |
| zweite Reinigungsphase | b | | | |
| Zeitpunkte innerhalb der Reinigungsphase a | a | a | a | a |
| Zeitpunkte₂ vor₂ Beginn₂ der Reinigungsphase a | z | z | | |
| Zeitpunkte₂innerhalb₂der₂Reinigungsphase b | b | b | | |
| Zeit | [t] | | | |
| Massendurchsatz | [m] | | | |

## Patentansprüche

1. Verfahren zum Durchspülen Polymer- beziehungsweise Kunststoffschmelze führender Teile von Folienextrusionsanlagen mit zumindest einem Extruder zwecks Chargenwechsel, wobei in dem zumindest einen Extruder, in dem Materialwechsel vorgenommen werden, eine periodische Änderung der Drehzahlen vorgenommen wird,
**dadurch gekennzeichnet, dass**
zumindest ein Teil der Extruder, an denen periodische Änderungen der Drehzahlen vorgenommen werden, zwei Funktionsgruppen zugeordnet wird,
- wobei die eine Funktionsgruppe aus mindestens einem Leitextruder (A; E) und die andere Funktionsgruppe aus mindestens einem Folgeextruder (B, C, D; F, G, H, J) besteht und
- wobei die Drehzahlen des mindestens einen Leitextruders und des mindestens einen Folgeextruders mit einer Amplitude entgegengesetzten Vorzeichen pulsieren,
- so dass während des Durchspülens ein bestimmter Massedurchsatz der Folienextrusionsanlage nicht unterschritten wird, welcher einen Folienabriss vermeidet.

2. Verfahren nach dem vorstehenden Anspruch, wobei
durch die Abstimmung der Drehzahl der verschiedenen Extruder ein geringerer Massedurchsatz der Folienextrusionsanlage eingestellt wird.

3. Verfahren nach einem der vorangegangenen Ansprüche, wobei
Extruder, an denen kein Materialwechsel vorgenommen wird, während des Spülprozesses mit einer konstanten Drehzahl betrieben werden.

4. Verfahren nach einem der vorstehenden Ansprüche,
**gekennzeichnet durch**
aufeinanderfolgende Reinigungsphasen mit folgendem Verlauf:
a) Bei Beginn der Reinigungsphase zum Zeitpunkt (a₁) wird bei dem mindestens einen Leitextruder (A; E) die Drehzahl kontinuierlich erhöht, während die Drehzahl mindestens eines Folgeextruders (B, C, D; F, G, H, J) kontinuierlich gesenkt wird.
b) Bei Erreichen eines zweiten Zeitpunkts (a₂) wird die Drehzahl des mindestens einen Leitextruders (A; E) und des mindestens einen Folgeextruders (B, C, D; F, G, H, J) über eine Zeitspanne konstant gehalten.
c) Bei Erreichen eines dritten Zeitpunkts (a₃) wird bei dem mindestens einen Leitextruder (A; E) die Drehzahl kontinuierlich gesenkt, während die Drehzahl des mindestens einen Folgeextruders (B, C, D; F, G, H, J) kontinuierlich erhöht wird.
d) Bei Erreichen eines vierten Zeitpunkts (a₄) wird die Drehzahl des mindestens einen Leitextruders (A, E) und des mindestens einen Folgeextruders (B, C, D; F, G, H, J) über eine Zeitspanne konstant gehalten.

5. Verfahren nach einem oder mehreren der vorstehenden Ansprüche, wobei
die während des Spülvorganges vorzunehmende Änderung der Drehzahlen der Extruder (A bis K) von einer zentralen Steuer- und Bedieneinheit aus durchgeführt wird.

6. Verfahren nach Anspruch 5, wobei
die Änderung der Drehzahlen der unterschiedlichen Extruder an der zentralen Steuer- oder Bedieneinheit (1) von einem Maschinenbediener manuell eingestellt wird.

7. Verfahren nach Anspruch 5, wobei
die zentrale Steuer- oder Bedieneinheit (1) die Änderung der Drehzahlen automatisch vornimmt.

8. Verfahren nach Anspruch 7, wobei
die zentrale Steuer- oder Bedieneinheit (1) bei der Änderung der Drehzahlen von der minimalen Drehzahl des mindestens einen Extruders der einen Funktionsgruppe ausgeht, um anschließend die erforderliche Drehzahl des mindestens einen Extruders der anderen Funktionsgruppe zu errechnen und einzustellen.

9. Verfahren nach Anspruch 7, wobei
die zentrale Steuer- oder Bedieneinheit (1) bei der Änderung der Drehzahlen, von der maximalen Drehzahl ausgeht, die der mindestens eine Extruder einer ersten Funktionsgruppe hat, wenn er seinen maximalen Massedruck erreicht, um anschließend die erforderliche Drehzahl des mindestens einen Extruders der zweiten Funktionsgruppe zu errechnen und einzustellen.

10. Verfahren nach einem oder mehreren der vorstehenden Ansprüche, wobei
bevorzugt Extruder mit großem Materialdurchsatz als Leitextruder (A, E) ausgewählt werden.

11. Verfahren nach einem oder mehreren der vorstehenden Ansprüche, wobei
mindestens einer der ausgewahlten Leitextruder (A, E) wahrend des Spülvorganges mit einem Material mit guten Spüleigenschaften beschickt wird.

12. Verfahren nach einem oder mehreren der vorstehenden Ansprüche, wobei
der mindestens eine Leitextruder (A, E) wahrend des Spülvorganges mit einem kostengünstigen Material beschickt wird.

13. Verfahren nach einem oder mehreren der vorstehenden Ansprüche, wobei
der Zeitraum, in dem der mindestens eine Leitextruder mit hoher Drehzahl und der mindestens eine Folgeextruder mit geringer Drehzahl gefahren wird, größer ist als der Zeitraum, in dem der mindestens eine Folgeextruder mit hoher Drehzahl und der mindestens eine Leitextruder mit geringer Drehzahl gefahren wird.

14. Steuer- und Bedieneinheit zur Durchführung eines der Verfahren nach den Ansprüchen 6 bis 13,
**gekennzeichnet durch**
Mittel zur automatisierten Ausführung eines Spülvorgangs, bei dem die Drehzahl des mindestens einen Leitextruders (A; E) und die Drehzahl des mindestens einen Folgeextruders (B, C, D; F, G, H, J) gegenüber dem Normalbetrieb periodisch verändert wird, wobei die Drehzahländerung der Leitextruder (A; E) und der Folgeextruder (B, C, D; F, G, H, J) während einer Spülphase ein entgegengesetztes Vorzeichen aufweist.

15. Steuer- und Bedieneinheit nach Anspruch 14, die Mittel zur Eingabe oder Ermittlung der Mindestdrehzahl des mindestens einen Extruders einer ersten Funktionsgruppe enthält,
**gekennzeichnet durch**
weitere Mittel zur automatischen Ermittlung der zur Aufrechterhaltung der Folienblase erforderlichen Drehzahl des mindestens einen Extruders der zweiten Funktionsgruppe.

16. Steuer- und Bedieneinheit nach Anspruch 14, die Mittel zur Eingabe oder Ermittlung der Maximaldrehzahl des mindestens einen Extruders einer ersten Funktionsgruppe enthält,
**gekennzeichnet durch**
weitere Mittel zur automatischen Ermittlung der zur Aufrechterhaltung der Folienblase erforderlichen Drehzahl des mindestens einen Extruders der zweiten Funktionsgruppe.

17. Steuer- und Bedieneinheit nach Anspruch 15 und/oder 16,
**gekennzeichnet durch**
Mittel zum automatischen Einstellen von Drehzahlober- und -untergrenzen für die Extruder, an denen Materialwechsel vorgenommen werden.

18. Steuer- und Bedieneinheit nach einem oder mehreren der Ansprüche 14 bis 17,
**gekennzeichnet durch**
Mittel zur Einstellung, optischen Darstellung oder Überwachung eines automatisierten Spülvorganges.

19. Folienextrusionanlage mit zumindest einem Extruder,
**gekennzeichnet durch**
eine Steuer- oder Bedieneinheit nach einem oder mehreren der Ansprüche 14 bis 18.

## Claims

1. Process for the flushing of polymer- or plastics-melt-conveying parts of film-extrusion plants with at least one extruder for batch-change purposes,
where a periodic change of the rotation rates is undertaken in at least one extruder in which materials change is undertaken,
**characterized in that**
at least one part of the extruders on which periodic changes of rotation rates are undertaken is allocated to two functional groups,
- where one of the functional groups is composed of at least one leading extruder (A; E) and the other functional group is composed of at least one following extruder (B, C, D; F, G, H, J) and
- where the rotation rates of the at least one leading extruder and of the at least one following extruder are pulsed with an amplitude with opposite sign,
- so that, during the flushing process, the melt throughput of the film-extrusion plant is always at or above a certain value at which film break-off is avoided.

2. Process according to the preceding claim,
where
a very small melt throughput is set for the film-extrusion plant by balancing the rotation rate of the different extruders.

3. Process according to any of the preceding claims,
where
extruders on which no materials change is undertaken are operated with a constant rotation rate during the purging process.

4. Process according to any of the preceding claims,
**characterized by**
successive cleaning phases proceeding as follows:
a) at the start of the cleaning phase at juncture (a₁) the rotation rate of the at least one leading extruder (A; E) is continuously increased, while the rotation rate of the at least one following extruder (B, C, D; F, G, H, J) is continuously lowered;
b) on reaching a second juncture (a₂), the rotation rate of the at least one leading extruder (A; E) and of the at least one following extruder (B, C, D; F, G, H, J) is held constant for a period;
c) on reaching a third juncture (a₃), the rotation rate of the at least one leading extruder (A; E) is continuously lowered, while the rotation rate of the at least one following extruder (B, C, D; F, G, H, J) is continuously increased;
d) on reaching a fourth juncture (a₄), the rotation rate of the at least one leading extruder (A, E) and of the at least one following extruder (B, C, D; F, G, H, J) is held constant for a period.

5. Process according to one or more of the preceding claims,
where
the change of the rotation rates of the extruders (A to K) to be undertaken during the purging procedure is carried out from a central unit serving for control and operation.

6. Process according to Claim 5,
where
the change of the rotation rates of the various extruders is set manually by a machine operator at the central unit (1) serving for control or operation.

7. Process according to Claim 5,
where
the central unit (1) serving for control or operation automatically undertakes the change of rotation rates.

8. Process according to Claim 7,
where
during the change of the rotation rates, the central unit (1) serving for control or operation starts from the minimum rotation rate of the at least one extruder of one of the functional groups, in order then to calculate and set the required rotation rate of the at least one extruder of the other functional group.

9. Process according to Claim 7,
where
during the change of the rotation rates, the central unit (1) serving for control or operation starts from the maximum rotation rate possessed by the at least one extruder of a first functional group when it achieves its maximum melt pressure, in order then to calculate and set the required rotation rate of the at least one extruder of the second functional group.

10. Process according to one or more of the preceding claims,
where
the extruders selected as leading extruder (A, E) are preferably those with high materials throughput.

11. Process according to one or more of the preceding claims,
where,
during the purging procedure, at least one of the selected leading extruders (A, E) is supplied with a material with good purging properties.

12. Process according to one or more of the preceding claims,
where,
during the purging procedure, the at least one leading extruder (A, E) is supplied with a low-cost material.

13. Process according to one or more of the preceding claims,
where
the time for which the at least one leading extruder is run with high rotation rate and the at least one following extruder is run with very low rotation rate is greater than the time for which the at least one following extruder is run with high rotation rate and the at least one leading extruder is run with very low rotation rate.

14. Unit serving for control and operation, for carrying out one of the processes according to Claims 6 to 13,
**characterized by**
means for the automated execution of a purging procedure in which the rotation rate of the at least one leading extruder (A; E) and the rotation rate of the at least one following extruder (B, C, D; F, G, H, J) is changed periodically from that of normal operation, where the rotation rate change of the leading extruders (A; E) and of the following extruders (B, C, D; F, G, H, J) has opposite sign during a purging phase.

15. Unit serving for control and operation according to Claim 14, which comprises means for the input or determination of the minimum rotation rate of the at least one extruder of a first functional group,
**characterized by**
further means for the automatic determination of the rotation rate required of the at least one extruder of the second functional group in order to maintain the film bubble.

16. Unit serving for control and operation according to Claim 14, which comprises means for the input or determination of the maximum rotation rate of the at least one extruder of a first functional group,
**characterized by**
further means for the automatic determination of the rotation rate required of the at least one extruder of the second functional group in order to maintain the film bubble.

17. Unit serving for control and operation according to Claim 15 and/or 16,
**characterized by**
means for the automatic setting of upper and lower rotation rate limits for the extruders on which materials changes are undertaken.

18. Unit serving for control and operation according to one or more of Claims 14 to 17,
**characterized by**
means for the setting, visual display or monitoring of an automated purging procedure.

19. Film-extrusion plant with at least one extruder,
**characterized by**
a unit serving for control or operation according to one or more of Claims 14 to 18.

## Revendications

1. Procédé pour purger des parties d'installation d'extrusion de feuille convoyant une fonte de polymères respectivement de matériau synthétique avec au moins une extrudeuse en vue d'un changement de charge, où est effectuée dans au moins une extrudeuse, dans laquelle le changement de matériel peut être fait, une modification périodique des nombres de tours,
**caractérisé en ce que**
au moins une partie des extrudeuses, auxquelles sont effectuées des modifications périodiques des nombres de tours, est associée à deux groupes fonctionnels,
- où un groupe fonctionnel est constitué d'au moins une extrudeuse directrice (A; E) et l'autre groupe fonctionnel d'au moins une extrudeuse de poursuite (B, C, D; F, G, H, J) et
- où les nombres de tours d'au moins une extrudeuse directrice et d'au moins une extrudeuse de poursuite pulsent avec une amplitude de signes opposés,
- de sorte que pendant la purge, un débit massique déterminé de l'installation d'extrusion de feuille n'est pas sous-dépassé, qui évite une rupture de la feuille.

2. Procédé selon la revendication précédente, où est réglé, par l'accord du nombre de tours des diverses extrudeuses, un débit massique plus petit de l'installation d'extrusion de feuille.

3. Procédé selon l'une des revendications précédentes, où l'extrudeuse, à laquelle n'est pas effectué de changement de matériau, peut fonctionner pendant le processus de purge à un nombre de tours constant.

4. Procédé selon l'une des revendications précédentes,
**caractérisé par**
des phases de nettoyage successives avec le déroulement suivant:
a) Au début de la phase de nettoyage à l'instant (a₁), dans au moins une extrudeuse directrice (A; E), le nombre de tours est augmenté continuellement, tandis que le nombre de tours d'au moins une extrudeuse de poursuite (B, C, D; F, G, H, J) est abaissé continuellement.
b) A l'atteinte d'un deuxième instant (a₂), le nombre de tours d'au moins une extrudeuse directrice (A; E) et d'au moins une extrudeuse de poursuite (B, C, D; F, G, H, J) est maintenu constant sur un lapse de temps.
c) Lors de l'atteinte d'un troisième instant (a₃), dans au moins une extrudeuse directrice (A; E), le nombre de tours est abaissé continuellement tandis que le nombre de tours d'au moins une extrudeuse de poursuite (B, C, D; F, G, H, J) est augmenté continuellement.
d) Lors de l'atteinte d'un quatrième instant (a₄), le nombre de tours d'au moins une extrudeuse directrice (A, E) et d'au moins une extrudeuse de poursuite (B, C, D; F, G, H, J) est maintenu constant sur un lapse de temps.

5. Procédé selon l'une ou plusieurs des revendications précédentes, où la modification des nombres de tours des extrudeuses (A à K), à effectuer pendant l'opération de purge, est effectuée à partir d'une unité de commande et d'actionnement centrale.

6. Procédé selon la revendication 5, où la modification des nombres de tours des différentes extrudeuses est réglée manuellement à l'unité de commande ou d'actionnement centrale (1) par un opérateur de la machine.

7. Procédé selon la revendication 5, où l'unité de commande ou d'actionnement centrale (1) modifie les nombres de tours automatiquement.

8. Procédé selon la revendication 7, où l'unité de commande ou d'actionnement centrale (1), lors de la modification des nombres de tours, part du nombre de tours minimal d'au moins une extrudeuse d'un groupe fonctionnel pour calculer et régler ensuite le nombre de tours requis d'au moins une extrudeuse de l'autre groupe fonctionnel.

9. Procédé selon la revendication 7, où l'unité de commande ou d'actionnement centrale (1), lors de la modification des nombres de tours, part du nombre de tours maximal que présente au moins une extrudeuse d'un premier groupe fonctionnel lorsqu'elle a atteint sa pression massique maximale pour calculer et régler ensuite le nombre de tours requis d'au moins une extrudeuse du second groupe fonctionnel.

10. Procédé selon l'une ou plusieurs des revendications précédentes, où sont sélectionnés de préférence des extrudeuses d'un grand débit de matériau comme extrudeuses directrices (A, E).

11. Procédé selon l'une ou plusieurs des revendications précédentes, où au moins l'une des extrudeuses directrices sélectionnées (A, E) est alimentée pendant l'opération de purge en un matériau ayant de bonnes propriétés de purge.

12. Procédé selon l'une ou plusieurs des revendications précédentes, où au moins une extrudeuse directrice (A, E) est alimentée pendant l'opération de purge en un matériau d'un coût avantageux.

13. Procédé selon l'une ou plusieurs des revendications précédentes, où le lapse de temps, pendant lequel au moins une extrudeuse directrice est amenée à fonctionner à un nombre de tours élevé et au moins une extrudeuse de poursuite à un nombre de tours plus bas, est plus grand que le lapse de temps dans lequel au moins une extrudeuse de poursuite est amenée à fonctionner à un nombre de tours élevé et au moins une extrudeuse directrice à un nombre de tours réduit.

14. Unité de commande et d'actionnement pour la mise en oeuvre d'un des procédés selon les revendications 6 à 13,
**caractérisée par**
des moyens pour l'exécution automatique d'une opération de purge, où le nombre de tours d'au moins une extrudeuse directrice (A; E) et le nombre de tours d'au moins une extrudeuse de poursuite (B, C, D; F, G, H, J) est modifié périodiquement par rapport au fonctionnement normal, où la modification du nombre de tours des extrudeuses directrices (A; E) et des extrudeuses de poursuite (B, C, D; F, G, H, J) présente pendant une phase de purge un signe opposé.

15. Unité de commande et d'actionnement selon la revendication 14, qui contient des moyens pour l'entrée ou la détermination du nombre de tours minimal d'au moins une extrudeuse d'un premier groupe fonctionnel,
**caractérisée par**
d'autres moyens pour la détermination automatique du nombre de tours requis pour conserver la bulle en feuille d'au moins une extrudeuse du second groupe fonctionnel.

16. Unité de commande et d'actionnement selon la revendication 14, qui contient des moyens pour l'entrée ou la détermination du nombre de tours maximal d'au moins une extrudeuse d'un premier groupe fonctionnel,
**caractérisée par**
d'autres moyens pour la détermination automatique du nombre de tours requis pour la conservation de la bulle en feuille d'au moins une extrudeuse du second groupe fonctionnel.

17. Unité de commande et d'actionnement selon la revendication 15 et/ou 16,
**caractérisée par**
des moyens pour le réglage automatique des limites supérieures et inférieures du nombre de tours pour les extrudeuses auxquelles on procède à des changements de matériau.

18. Unité de commande et d'actionnement selon l'une ou plusieurs des revendications 14 à 17,
**caractérisée par**
des moyens pour le réglage, la représentation optique ou la surveillance d'une opération de purge automatique.

19. Installation d'extrusion de feuille avec au moins une extrudeuse,
**caractérisée par**
une unité de commande et d'actionnement selon l'une ou plusieurs des revendications 14 à 18.
